# EUROPÄISCHE PATENTANMELDUNG

(11) **EP 4 793 592 A1**
(43) Veröffentlichungstag der Anmeldung: **19.08.2026**
(21) Anmeldenummer: 26158122.7
(22) Anmeldetag: 12.02.2026
(51) Int. Cl.: F41H 7/04, B23K 33/00

(54) **FAHRZEUG-PANZERUNG UND VERFAHREN ZU DEREN HERSTELLUNG**

(30) Priorität: 13.02.2025 DE 102025105352
(71) Anmelder: Benteler Automobiltechnik GmbH, 33102 Paderborn (DE)
(72) Erfinder: Klasfausehweh, Udo, 33334 Gütersloh (DE)
(74) Vertreter: Ksoll, Peter

(57) **Zusammenfassung**

Die Erfindung betrifft eine Fahrzeug-Panzerung (1) sowie ein Verfahren zu deren Herstellung. Eine Fahrzeug-Panzerung (1) weist ein erstes Bauteil (2) aus Panzerstahl und ein zweites Bauteil (3) aus Panzerstahl auf. Das erste Bauteil (2) und das zweite Bauteil (3) sind dreidimensional geformte Formteile, die an ihren Fügeflächen (5, 7) mit einer Überlappung (10) aneinander liegend durch zumindest eine Schweißverbindung (13, 14) gefügt sind, zumindest eine Fügefläche (5, 7) ist durch eine spanende Bearbeitung erzeugt.

## Beschreibung

Die Erfindung betrifft eine Fahrzeug-Panzerung für sondergeschützte Fahrzeuge sowie ein Verfahren zu deren Herstellung. Die Fahrzeug-Panzerung ist insbesondere für den Einsatz in Seitenteilen, Türen, Fahrzeugsäulen, Dach- und Bodenbereichen sowie weiteren strukturellen Fahrzeugkomponenten vorgesehen.

Sondergeschützte gepanzerte Fahrzeuge sollen Personen sowie Sachwerte vor ballistischen Angriffen schützen. Daher werden in solchen Fahrzeugen Panzerungen verbaut. Hierzu zählen Seitenteile, Fahrzeugsäulen, Türen, Front- und Heckbauteile, der Dachbereich sowie der Karosserieunterbau einschließlich Boden bzw. Bodengruppen und Radeinbauten.

Aus dem Stand der Technik sind Fahrzeug- Panzerungen bekannt, bei denen mehrere Bauteile aus Panzerstahl schweißtechnisch miteinander verbunden sind. Hierbei werden häufig stumpf aneinanderstoßende Bauteile oder in einem Winkel angeordnete Bauteile verschweißt. Solche Ausführungen sind beispielsweise aus der DE 10 2007 005 301 A1 und der DE 10 2020 114 094 A1 bekannt.

Nachteilig bei bekannten Lösungen ist, dass zur Einhaltung geringer Spaltmaße und enger Toleranzen aufwendige Spannvorrichtungen erforderlich sind, wodurch hohe Eigenspannungen, Verzug sowie eine reduzierte Lebensdauer der Schweißverbindung entstehen können. Insbesondere bei warmgeformten und pressgehärteten Bauteilen mit hoher Steifigkeit ist eine spannungsarme Fügung erschwert.

Eine Fahrzeug-Panzerung im Sinne der Erfindung ist eine aus zumindest zwei Bauteilen aus Panzerstahl zusammengesetzte Fahrzeugkomponente. Die zumindest zwei Bauteile aus Panzerstahl sind durch eine Schweißverbindung gefügt.

Schweißen ist eine die Gestaltung bestimmendes Fertigungsverfahren für Schweißbauteile und eines der wichtigsten und am weitesten verbreiteten Fügeverfahren im Fahrzeugbau. Unter Schweißen versteht man das unlösbare stoffschlüssige Verbinden von Bauteilen unter Anwendung von Wärme und Druck mit oder ohne Schweißzusatzwerkstoffen. Beim Verbindungsschweißen werden die Bauteile durch Schweißnähte am Schweißstoß zum Schweißbauteil zusammengefügt. Mehrere Schweißbauteile ergeben eine Schweißgruppe und mehrere Schweißgruppen eine Schweißkonstruktion.

Durch Schweißen werden die Bauteile bzw. Bauteilabschnitte so miteinander verbunden, dass diese die an sie gestellten Anforderungen über eine erwartete Lebensdauer erfüllen. Dazu müssen die Schweißverbindungen anforderungsgerechte Qualitätskriterien und Gütemerkmale erfüllen. Diese sind eng mit den an die jeweiligen Bauteilanforderungen im Einsatz gebunden. Insbesondere bei Panzerungen für sondergeschützte Fahrzeuge sind die Anforderungen besonders hoch. Bei Fahrzeug-Panzerungen sind nur kleine Spalte erlaubt. Auch bestehen hinsichtlich der Spaltmaße hohe Toleranzanforderungen.

Zur Sicherstellung der Spaltmaße unter Einhaltung der Toleranzanforderungen müssen die zu fügenden Bauteile während des Fügens in eine Zwangslage gebracht werden. Dies ist nicht nur zeitaufwendig, sondern erzeugt im Bauteil und der Fügenaht selbst große Spannungen, die zu Rissen oder schnellerem Verschleiß der Fügenaht führen kann. Insbesondere bei warmgeformten Bauteilen mit deren typischerweise hohen Steifigkeiten ist dies oft gar nicht möglich.

Der Erfindung liegt die Aufgabe zugrunde, eine schweißtechnisch gefügte Fahrzeug-Panzerung bereitzustellen, die eine hohe ballistische Schutzwirkung aufweist, eine verbesserte Maßhaltigkeit besitzt, reduzierte Eigenspannungen und einen geringen Verzug zeigt und ohne Erhöhung des Bauteilgewichts hergestellt werden kann.

Weiterhin soll ein Verfahren zur Herstellung einer solchen Fahrzeug-Panzerung angegeben werden.

Die Lösung des gegenständlichen Teils besteht in einer Fahrzeug-Panzerung gemäß Anspruch 1.

Der verfahrensmäßige Teil der Aufgabe wird durch ein Verfahren gemäß Anspruch 10 gelöst.

Vorteilhafte Weiterbildungen und Ausgestaltungen der erfindungsgemäßen Fahrzeug-Panzerung ebenso wie des erfindungsgemäßen Verfahrens sind Gegenstand der abhängigen Ansprüche.

Die erfindungsgemäße Fahrzeug-Panzerung weist zwei dreidimensional geformte Bauteile aus Panzerstahl auf, die an durch spanende Bearbeitung erzeugten Fügeflächen mit einer Überlappung aneinander liegen und schweißtechnisch gefügt sind. Durch die spanend erzeugten Fügeflächen werden enge Spaltmaße ohne Zwangslagen ermöglicht, wodurch Eigenspannungen und Verzug reduziert werden.

Die Erfindung ermöglicht:
- eine hohe Maßhaltigkeit der Fahrzeug-Panzerung,
- eine verbesserte Dauerfestigkeit der Schweißverbindungen,
- eine hohe ballistische Schutzwirkung durch die Überlappung der Bauteile,
- eine Reduktion von Schweißverzug und Schrumpfungen sowie
- eine wirtschaftliche Herstellung ohne aufwendige Spannvorrichtungen.

Die Erfindung schafft eine Fahrzeug-Panzerung mit hoher Lebensdauer ohne eine Erhöhung des Bauteilgewichts. Die schweißtechnische Fügung zwischen den beiden Bauteilen ist hoch stabil. Die Fahrzeug-Panzerung zeichnet sich durch ihre hohe Maßhaltigkeit aus. Innere Spannungen (Schweißeigenspannungen) und Formänderungen (Schrumpfungen) in der Panzerung sind reduziert. Die Fahrzeug-Panzerung weist eine hohe Beschusssicherheit bzw. Beschussfestigkeit auf. Durch die Überlappung der beiden Bauteile ist kein Schutzverlust der Fahrzeug-Panzerung zu erwarten. Aufgrund der erfindungsgemäßen Konfiguration der Stoßverbindung sind Eigenspannungen und damit einhergehende Formänderungen reduziert. Für die frästechnische Herstellung einer bzw. jeder Fügefläche ist zwar ein zusätzlicher Arbeitsschritt notwendig. Allerdings fallen hierdurch große Spannwerkzeuge weg. Eine erfindungsgemäße Fahrzeug-Panzerung zeichnet sich durch ihre hohe Maßhaltigkeit und geringem Verzug aus.

Die zumindest eine Fügefläche oder jede Fügefläche ist durch spanende Bearbeitung erzeugt, insbesondere ist eine Fügefläche durch Fräsen hergestellt.

Eine Fahrzeug-Panzerung weist ein erstes Bauteil aus Panzerstahl und ein zweites Bauteil aus Panzerstahl auf. Das erste Bauteil und das zweite Bauteil besitzen jeweils an einem Endabschnitt eine Fügefläche. Sowohl das erste Bauteil als auch das zweite Bauteil sind dreidimensional geformte Formteile. Die Fügefläche am ersten Bauteil und/oder die Fügefläche am zweiten Bauteil sind durch eine spanende Bearbeitung erzeugt.

Besonders vorteilhaft sind sowohl die Fügefläche am ersten Bauteil als auch die Fügefläche am zweiten Bauteil durch spanende Bearbeitung erzeugt.

Die beiden Bauteile sind an den Fügeflächen mit einer Überlappung aneinander liegend durch zumindest eine Schweißverbindung gefügt.

Das erste Bauteil und/oder das zweite Bauteil können warmgeformt sein. Besonders vorteilhaft sind das erste Bauteil und das zweite Bauteil warmgeformt und pressgehärtet.

Alternativ können das erste Bauteil und/oder das zweite Bauteil auch durch Kaltformen zu einem dreidimensional geformten Formteil geformt sein.

Eine vorteilhafte Ausführungsform sieht vor, dass das erste Bauteil eine Wanddicke aufweist und das zweite Bauteil eine Wanddicke aufweist. Weiterhin weist die Überlappung eine Breite auf. Das Verhältnis der Wanddicke des ersten Bauteils und/oder der Wanddicke des zweiten Bauteils zur Breite der Überlappung ist vorzugsweise zwischen 1 : 2 und 1 : 4 bemessen.

Die Breite der Überlappung ist gemessen entlang der aneinander liegenden Fügeflächen. Die Überlappung erstreckt sich in Längsrichtung der beiden aneinander gefügten Bauteile quer zur Wanddicke der Bauteile.

Weiterhin vorteilhaft ist die Wanddicke des ersten Bauteils und/oder die Wanddicke des zweiten Bauteils im Bereich der Fügeflächen, durch spanende Bearbeitung um 1 % bis 20 %, insbesondere um 4 % bis 15 %, vorzugsweise um 10 % ± 2 % reduziert.

Durch die spanende Bearbeitung ist eine Schicht vom ersten Bauteil und/oder zweiten Bauteil abgetragen. Auf diese Weise hält eine bzw. jede Fügefläche ihre geometrische Gestalt.

An einem Endabschnitt eines Bauteils, vorzugsweise an jedem Endabschnitt eines Bauteils, ist eine Falz mit einer Stufe oder Schräge und mit jeweils einer Fügefläche erzeugt. Die Bauteile werden in Längs- und Querrichtung aneinanderstoßend zusammengesetzt und mittels Schweißverbindungen gefügt.

Eine besonders vorteilhafte Ausführungsform sieht vor, dass eine Stirnfläche des Endabschnitts des ersten Bauteils und ein Schulterabschnitt des Endabschnitts des zweiten Bauteils und/oder eine Stirnfläche am Endabschnitt des zweiten Bauteils und ein Schulterabschnitt des Endabschnitts des ersten Bauteils sich zumindest bereichsweise überlappen.

Auf diese Weise erfolgt eine Verbindung zwischen den beiden Bauteilen durch eine Kombination eines Stumpfstoßes mit einem Überlappungsstoß. Das erste Bauteil und das zweite Bauteil weisen jeweils am Endabschnitt eine Bauteilkante mit einem Falz auf. Hierbei überlappen sich die Fügeflächen, sowohl in Längsrichtung der beiden Bauteile als auch in Querrichtung der Bauteile zumindest bereichsweise. Es entsteht eine Doppelüberlappung. Dies ist vorteilhaft hinsichtlich einer Verringerung der Bauteilhöhe sowie insbesondere hinsichtlich der Zug- und Scherfestigkeit der stoffschlüssigen Fügung.

Durch die erfindungsgemäße Ausgestaltung sind sehr geringe Spaltbreiten zwischen den Fügeflächen möglich. Insbesondere beträgt die Spaltbreite zwischen den Fügeflächen am Endabschnitt des ersten Bauteils und am Endabschnitt des zweiten Bauteils maximal 0,9 mm.

Für die Praxis vorteilhaft ist entlang einer Stirnfläche am Endabschnitt des ersten Bauteils eine Schweißverbindung und/oder entlang einer Stirnfläche am Endabschnitt eines zweiten Bauteils eine Schweißverbindung vorgesehen.

Die beiden Schweißverbindungen sind in Richtung der Überlappung mit Abstand zueinander angeordnet. Vorzugsweise liegt eine Schweißverbindung auf einer Außenseite und die andere Schweißverbindung auf einer Innenseite der Fahrzeug-Panzerung.

Weiterhin vorteilhaft ist eine Ausführungsform, bei der sich an die Fügefläche am ersten Bauteil und/oder an die Fügefläche am zweiten Bauteil eine Schräge anschließt. Die Schräge läuft unter einem Winkel ausgehend von der Fügefläche zu einer Wandfläche des ersten Bauteils bzw. des zweiten Bauteils aus.

Für die Praxis vorteilhaft schließt die Schräge einen Winkel ein zu einer parallel zu den Fügeflächen erstreckender Bauteilebene. Der Winkel ist spitz, vorzugsweise beträgt der Winkel 25° ± 5°.

Grundsätzlich kann der Winkel zwischen 20° und 60° bemessen sein.

An eine Fügefläche kann sich auch ein gekrümmt verlaufender Schulterabschnitt anschließen, der von der Fügefläche bis zu einer Wandfläche des ersten bzw. zweiten Bauteils ausläuft. Eine solche Konfiguration ergibt sich insbesondere, wenn die Fügefläche mittels eines Kugelfräsers erzeugt wird. Der Schulterabschnitt weist dann einen Radius auf, der dem Radius des Kugelfräsers entspricht.

Zur Herstellung einer Fahrzeug-Panzerung werden zumindest zwei ebene oder formgeformte Platinen aus Panzerstahl bereitgestellt. Die Platinen werden in einem Pressenwerkzeug dreidimensional zu einem Bauteil, also einem Formteil, umgeformt. Anschließend wird zumindest an einem Endabschnitt eines der beiden Bauteile vorzugsweise an einem Endabschnitt des ersten Bauteils und an einem Bauteil des zweiten Bauteils eine Fügefläche durch spanende Bearbeitung erzeugt. Hierbei wird Material spanend, insbesondere durch Fräsen, abgetragen. Danach werden die Bauteile an den Fügeflächen relativ zueinander positioniert. Die Bauteile liegen an den Fügeflächen überlappend aneinander. Es wird ein Überlappstoß mit einer Überlappung hergestellt. Das eine Bauteil ragt über das andere Bauteil hinaus. Die Bauteile werden dann stoffschlüssig mittels zumindest einer Schweißverbindung miteinander gefügt. Die Fügung erfolgt vorzugsweise beidseitig der Überlappung am Ende bzw. Anfang der aneinander liegenden Fügeflächen. Die Schweißverbindungen sind insbesondere als Schweißnähte ausgeführt. Die Schweißnähte verschließen den Spalt zwischen den Fügeflächen.

Zur Herstellung der dreidimensional geformten Bauteile können diese warmumgeformt und insbesondere pressgehärtet werden.

Im Rahmen der Erfindung kommen vorzugsweise Bauteile aus Panzerstahl zur Anwendung die aus einer Stahllegierung bestehen, welche mindestens folgende Legierungsbestandteile ausgedrückt in Gewichtsprozent (Gew-%) aufweist: Kohlenstoff (C) 0,17 bis 0,5; Mangan (Mn) 0,3 bis 2,5 und Nickel (Ni) 0,5 bis 3,0.

Dieser Panzerstahl besitzt sehr gute Eigenschaften insbesondere auch für das Presshärten.

Die Stahllegierung weist vorzugsweise folgende weitere Legierungsbestandteile, ausgedrückt in Gewichtsprozent (Gew.-%) auf: Kohlenstoff (C) 0,41 % bis 0,45 %, Silizium (Si) 0,30 % bis 0,40 %, Mangan (Mn) 0,75 % bis 0,95 %, Phosphor (P) maximal 0,015 %, Schwefel (S) maximal 0,003 %, Aluminium (AI) 0,035 % bis 0,05 %, Bor (B) 0,002 % bis 0,003 %, Chrom (Cr) 0,50 % bis 0,60 %, Kupfer (Cu) maximal 0,10 %, Stickstoff (N) maximal 0,013 %, Niob (Nb) 0,035 % bis 0,045 %, Nickel (Ni) 2,00 % bis 2,20 %, Titan (Ti) 0,02 % bis 0,04 %, Vanadium (V) maximal 0,03 %, Molybdän (Mo) 0,45 % bis 0,59 %, Rest Eisen einschließlich erschmelzungsbedingter Verunreinigungen.

Warmgeformte und pressgehärtete Bauteile weisen eine Zugfestigkeit Rₘ von mindestens 1600 MPa bis 2000 MPa, insbesondere auch von größer 2000 MPa bis 2350 MPa auf, bei einer Bruchdehnung A5 von größer 5% sowie einer Härte von 350 bis 700 Vickers (HV10).

Möglich ist es auch, dass ein Bauteil aus Panzerstahl kalt zum Formbauteil geformt ist.

Die Erfindung ist nachfolgend anhand eines Ausführungsbeispiels beschrieben. Es zeigen:
- Figur 1: jeweils einen Ausschnitt eines ersten Bauteils und eines zweiten Bauteils vor einer schweißtechnischen Fügung und
- Figur 2: einen Ausschnitt aus einer erfindungsgemäßen Fahrzeug-Panzerung mit schweißtechnisch gefügtem ersten und zweiten Bauteil.

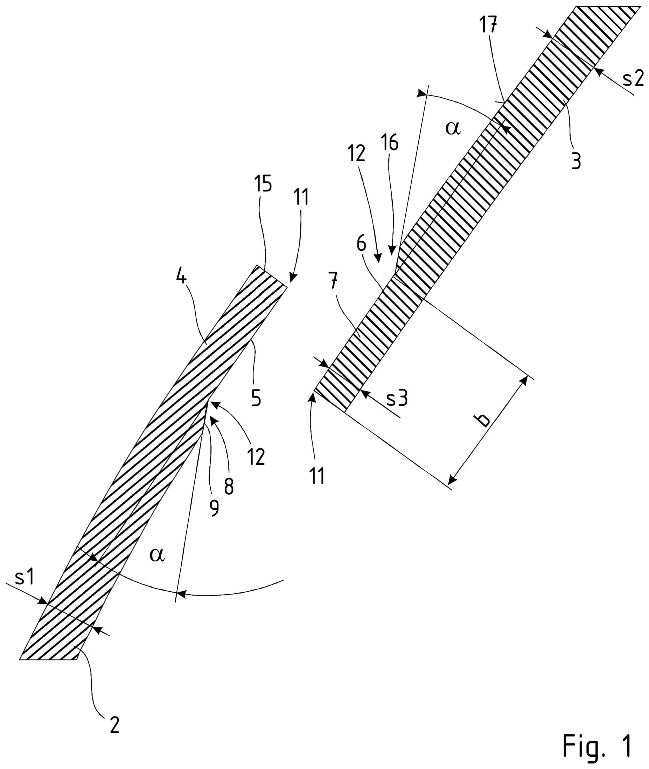

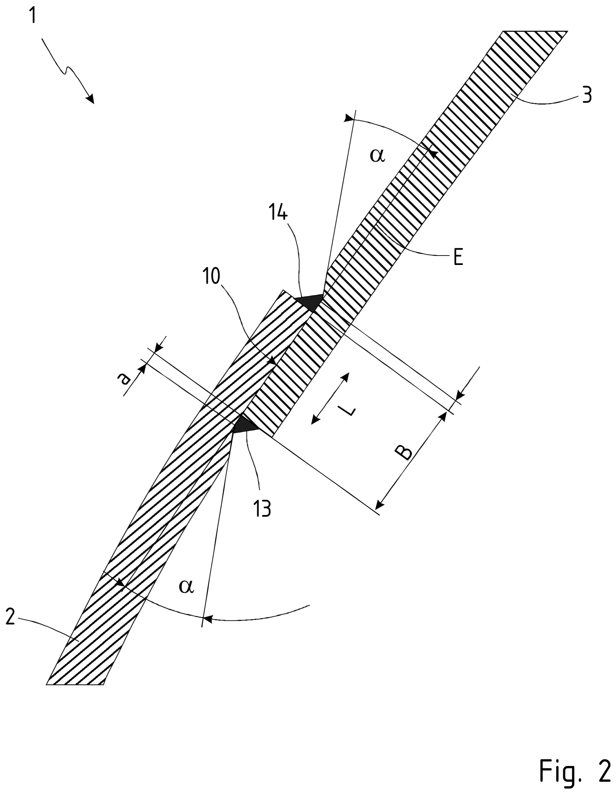

Anhand der Figuren 1 und 2 ist eine erfindungsgemäße Fahrzeug-Panzerung 1 und deren Herstellung erläutert.

Die Fahrzeug-Panzerung 1 weist ein erstes Bauteil 2 aus Panzerstahl und ein zweites Bauteil 3 aus Panzerstahl auf. Bei dem ersten Bauteil 2 und dem zweiten Bauteil 3 handelt es sich um dreidimensionale geformte Formbauteile. Diese können warmgeformt und insbesondere pressgehärtet oder kaltgeformt sein.

Das erste Bauteil 2 weist einen Endabschnitt 4 mit einer Fügefläche 5 auf. Das zweite Bauteil 3 weist ebenfalls einen Endabschnitt 6 mit einer Fügefläche 7 auf. Das erste Bauteil 2 und das zweite Bauteil 3 sind schweißtechnisch gefügt.

Die Fügefläche 5 am ersten Bauteil 2 und die Fügefläche 7 am zweiten Bauteil 3 sind durch spanende Bearbeitung erzeugt. Durch spanende Bearbeitung ist eine Schicht am Endabschnitt 4 des ersten Bauteils 2 und am Endabschnitt 6 des zweiten Bauteil 3 abgefräst. Hierdurch entsteht an jedem Endabschnitt 4, 6 jeweils eine Falz 8 mit einer Schräge 9 und einer Fügefläche 5 bzw. 7.

Der Endabschnitt 4 des ersten Bauteils 2 wird nachfolgend auch als erster Endabschnitt 4 bezeichnet. Der Endabschnitt 6 des zweiten Bauteils 3 wird nachfolgend auch als zweiter Endabschnitt 6 bezeichnet.

Die Figur 1 zeigt das erste Bauteil 2 und zweite Bauteil 3 vor der schweißtechnischen Fügung. Das erste Bauteil 2 weist eine Wanddicke s1 auf. Das zweite Bauteil 3 weist eine Wanddicke s2 auf. Bei den Wanddicken s1, s2 handelt es sich um die Ausgangswanddicken des ersten Bauteils 2 und des zweiten Bauteils 3. Im dargestellten Ausführungsbeispiels sind die Wanddicke s1 und die Wanddicke s2 gleich dick. Sowohl der Endabschnitt 4 des ersten Bauteils 2 und auch der Endabschnitt 6 des zweiten Bauteils 3 weisen im Bereich der Fügeflächen 5 bzw. 7 jeweils eine Wanddicke s3 auf. Die Wanddicke s3 eines Endabschnitts 4, 6 ist gegenüber der Wanddicke s1 des ersten Bauteils 2 und der Wanddicke s2 des zweiten Bauteils 3 reduziert.

In der Figur 1 ist die Breite einer Fügefläche 5 bzw. 7 in Längserstreckung eines Endabschnitts 4, 6 gemessen mit b bezeichnet.

Das erste Bauteil 2 und das zweite Bauteil 3 werden relativ zueinander positioniert. Hierbei liegen die Fügeflächen 5, 7 mit einer Überlappung 10 überlappend aneinander. Links und rechts der Überlappung 10 jeweils am Anfang 11 bzw. Ende 12 einer Fügefläche 5, 7 werden die beiden Bauteile 2, 3 durch Schweißverbindungen 13, 14 miteinander gefügt.

Die Figur 2 zeigt einen Ausschnitt aus der Fahrzeug-Panzerung 1. Sowohl das erste Bauteil 2 als auch das zweite Bauteil 3 ist ein dreidimensional geformtes Formteil. Das erste Bauteil 2 und das zweite Bauteil 3 überlappen sich mit ihren Endabschnitten 4, 6. Die Fügeflächen 5, 7 der Bauteile 2, 3 liegen überlappend aneinander. Die Überlappung 10 besitzt eine Breite B. Die Breite B ist gemessen in Längsrichtung L der Endabschnitte 4, 6. Die Überlappung 10 erstreckt sich quer zur Wanddicke s1 des ersten Bauteils 2 und der Wanddicke s2 des zweiten Bauteils 3.

Das Verhältnis der Wanddicke s1 des ersten Bauteil 2 und das Verhältnis der Wanddicke s2 des zweiten Bauteils 3 zur Breite B der Überlappung ist zwischen 1 : 2 und 1 : 4 bemessen.

Die Wanddicke s1 des ersten Bauteils 2 und die Wanddicke s2 des zweiten Bauteils 3 sind im Bereich Fügeflächen 5, 7 jeweils durch spanende Bearbeitung um 10 % ± 2 % verringert. Grundsätzlich kann die Reduktion der Wanddicke zwischen 1 % bis 20 %, vorzugsweise zwischen 4 % bis 15 % bemessen sein.

Der Endabschnitt 4 des ersten Bauteil 2 und der Endabschnitt 6 des zweiten Bauteil 3 weisen jeweils eine Falz 8 mit der Schräge 9 und der Fügefläche 5 bzw. 7 auf. Die Fügeflächen 5, 7 erstrecken sich in Längsrichtung L der Endabschnitte 4, 6. Jeder Endabschnitt 4, 6 besitzt am freien Ende eine Stirnfläche 15. Die Stirnfläche 15 verläuft quer zur Wanddicke s3 eines Endabschnitts 4, 5.

Die Stirnfläche 15 des ersten Endabschnitts 4 und ein Schulterabschnitt 16 des zweiten Endabschnitts 6 überlappen sich bei gefügten Bauteilen 2, 3 bereichsweise. Ebenso überlappen sich eine Stirnfläche 15 des zweiten Endabschnitts 6 und ein Schulterabschnitt 16 des ersten Endabschnitts 4. Auf diese Weise erfolgt eine Doppelüberlappung. Hierbei überlappen sich die Endabschnitte 4, 6 an den aneinander liegenden Fügeflächen 5, 7 sowie quer dazu den Stirnflächen 15 und den Schulterabschnitten 16 der Endabschnitte 4, 6.

Der erste Endabschnitt 4 und der zweite Endabschnitt 6 überlappen sich längs und quer.

Die Figur 2 zeigt das entlang einer Stirnfläche 15 am Endabschnitt 4 des ersten Bauteils 2 eine Schweißverbindung 13 in Form einer Schweißnaht und entlang einer Stirnfläche 15 am Endabschnitt 6 des zweiten Bauteils 3 eine Schweißverbindung 14 in Form einer Schweißnaht vorgesehen ist. Die Spaltbreite zwischen den Fügeflächen 5, 7 beträgt maximal 0,9 mm.

An die Fügefläche 5 am ersten Bauteil 2 und an die Fügefläche 7 am zweiten Bauteil 3 schließt sich jeweils eine Schräge 9 an. Eine Schräge 9 ist jeweils Bestandteil eines Schulterabschnitts 16. Eine Schräge 9 verläuft ausgehend von der Fügefläche 5 bzw. 7 in Richtung zu einer äußeren Wandfläche 17 des ersten Bauteils 2 bzw. zweiten Bauteils 3. Die Schräge 9 nimmt zu einer sich parallel zu den Fügeflächen 5, 7 erstreckenden Ebene E einen spitzen Winkel α ein, der im dargestellten Ausführungsbeispiel 25° beträgt.

Zwischen der Stirnfläche 15 des ersten Bauteils 2 und der Schräge 9 des zweiten Bauteils 3 ebenso wie zwischen der Stirnfläche 15 des zweiten Bauteils 3 und der Schräge 9 des ersten Bauteils 2 ist ein Abstand a vorgesehen. In diesen Abstand a wird jeweils eine Schweißverbindungsnaht 13. 14 gelegt. Die Schweißverbindungen 13, 14 bzw. deren Schweißnähte sind symmetrisch zur Mittellängsebene der Überlappung 10 angeordnet. In der Kombination mit der erfindungsgemäßen Fügeflächenkonfiguration sind Schrumpfungen (Längs-, Quer- und Winkelschrumpfungen) reduziert, Eigenspannungen und Verzug verringert und insgesamt die Maßhaltigkeit der Fahrzeug-Panzerung 1 verbessert. Die Überlappung 10 und die beidseitige Schweißverbindung 13, 14 gewährleistet einen hohen ballistischen Schutz.

### Bezugszeichen:

- 1 -: Fahrzeug-Panzerung
- 2 -: erstes Bauteil
- 3 -: zweites Bauteil
- 4 -: Endabschnitt v. 2
- 5 -: Fügefläche v. 2
- 6 -: Endabschnitt v. 3
- 7 -: Fügefläche v. 3
- 8 -: Falz
- 9 -: Schräge
- 10 -: Überlappung
- 11 -: Anfang z. 5 bzw. 7
- 12 -: Ende z. 5 bzw. 7
- 13 -: Schweißverbindungsnaht
- 14 -: Schweißverbindungsnaht
- 15 -: Stirnfläche
- 16 -: Schulterabschnitt
- 17 -: Wandfläche

- a -: Abstand
- s1 -: Wanddicke v. 2
- s2 -: Wanddicke v. 3
- s3 -: Wanddicke
- b -: Breite von 5, 7
- B -: Breite
- L -: Längsrichtung
- α -: Winkel
- E -: Ebene

## Patentansprüche

1. Fahrzeug-Panzerung (1) für ein sondergeschütztes Fahrzeug, mit
- einem ersten Bauteil (2) aus Panzerstahl und
- einem zweiten Bauteil (3) aus Panzerstahl,
wobei
- das erste Bauteil (2) an einem Endabschnitt (4) eine Fügefläche (5) und
- das zweite Bauteil (3) an einem Endabschnitt (6) eine Fügefläche (7) aufweist,
wobei
- das erste Bauteil (2) und das zweite Bauteil (3) jeweils dreidimensional geformte Formbauteile sind und
- das erstes Bauteil (2) und das zweite Bauteil (3) an den Fügeflächen (5, 7) schweißtechnisch miteinander gefügt sind,
**dadurch gekennzeichnet, dass**
- die Fügefläche (5) am ersten Bauteil (2) und/oder die Fügefläche (7) am zweiten Bauteil (3) durch spanende Bearbeitung erzeugt ist und
- das erste Bauteil (2) und das zweite Bauteil (3) an den Fügeflächen (5, 7) mit einer Überlappung (10) aneinander liegen und
- die Bauteile (2, 3) im Bereich der Überlappung (10) durch zumindest eine Schweißverbindung (13, 14) stoffschlüssig miteinander gefügt sind.

2. Fahrzeug-Panzerung (1) nach Anspruch 1, **dadurch gekennzeichnet, dass** das erste Bauteil (2) und/oder das zweite Bauteil (3) warmgeformt und vorzugsweise pressgehärtet ist.

3. Fahrzeug-Panzerung (1) nach Anspruch 1, **dadurch gekennzeichnet, dass** das erste Bauteil (2) und/oder das zweite Bauteil (3) kaltgeformt ist.

4. Fahrzeug-Panzerung (1) nach einem der Ansprüche 1 bis 3, **dadurch gekennzeichnet, dass** das erste Bauteil (2) eine Wanddicke (s1) aufweist und das zweite Bauteil (3) eine Wanddicke (s2) aufweist sowie die Überlappung (10) eine Breite (B) aufweist, wobei das Verhältnis der Wanddicke (s1) des ersten Bauteils (2) und/oder der Wanddicke (s2) des zweiten Bauteils (3) zur Breite (B) der Überlappung zwischen 1:2 und 1:4 bemessen ist.

5. Fahrzeug-Panzerung (1) nach einem der Ansprüche 1 bis 4, **dadurch gekennzeichnet, dass** das erste Bauteil (2) eine Wanddicke (s1) aufweist und das zweite Bauteil (3) eine Wanddicke (s2) aufweist, wobei die Wanddicke (s1) des ersten Bauteils (2) und/oder die Wanddicke (s2) des zweiten Bauteils (3) im Bereich der Fügefläche (5) des ersten Bauteils (2) und/oder der Fügefläche (7) des zweiten Bauteils (3) durch die spanende Bearbeitung um 1 % bis 20 %, insbesondere um 4 % bis 15 %, vorzugsweise um 10 % +/- 2 %, reduziert ist.

6. Fahrzeug-Panzerung (1) nach einem der Ansprüche 1 bis 5, **dadurch gekennzeichnet , dass** sich eine Stirnfläche (15) des Endabschnitts (4) des ersten Bauteils (2) und ein Schulterabschnitt (16) des Endabschnitts (6) des zweiten Bauteils (3) und/oder eine Stirnfläche (15) des Endabschnitts (6) des zweiten Bauteils und ein Schulterabschnitt (16) des Endabschnitts (4) des ersten Bauteils zumindest bereichsweise überlappen.

7. Fahrzeug-Panzerung (1) nach einem der Ansprüche 1 bis 6, **dadurch gekennzeichnet , dass** eine Spaltbreite zwischen den Fügeflächen (5, 7) maximal 0,9 mm beträgt.

8. Fahrzeug-Panzerung (1) nach einem der Ansprüche 1 bis 7, **dadurch gekennzeichnet, dass** entlang einer Stirnfläche (15) am Endabschnitt (4) des ersten Bauteils (2) eine Schweißverbindung (13) und/oder entlang einer Stirnfläche (15) am Endabschnitt (6) des zweiten Bauteils (3) eine Schweißverbindung (13) vorgesehen ist.

9. Fahrzeug-Panzerung (1) nach einem der Ansprüche 1 bis 8, **dadurch gekennzeichnet, dass** sich an die Fügeflächen (5, 7) des jeweiligen Bauteils (2, 3) eine Schräge (9) anschließt, welche bis zu einer Wandfläche (17) des jeweiligen Bauteils (2, 3) verläuft.

10. Verfahren zur Herstellung einer Fahrzeug-Panzerung (1) nach einem der Ansprüche 1 bis 9, bei dem
- zumindest zwei ebene oder vorgeformte Platinen aus Panzerstahl bereitgestellt werden,
- jede Platine in einem in einem Pressenwerkzeug dreidimensional zu einem Bauteil (2, 3) umgeformt wird,
- anschließend an zumindest einem der Bauteile (2, 3) an einem Endabschnitt (4, 6) eine Fügefläche (5, 7) durch spanende Bearbeitung erzeugt wird,
- die Bauteile (2, 3) an den Fügeflächen (5, 7) mit einer Überlappung (10) aneinander liegend relativ zueinander positioniert werden und
- die Bauteile (2, 3) im Bereich der Überlappung (10) durch zumindest eine Schweißverbindung (13, 14) stoffschlüssig miteinander gefügt werden.

11. Verfahren nach Anspruch 10, **dadurch gekennzeichnet, dass** zumindest eine Platine warm umgeformt und vorzugsweise pressgehärtet wird.

12. Verfahren nach Anspruch 10, **dadurch gekennzeichnet, dass** zumindest eine Platine kalt umgeformt wird.
